# EUROPEAN PATENT SPECIFICATION

(11) **EP 3 961 012 B1**
(45) Date of publication and mention of the grant of the patent: **10.04.2024**
(21) Application number: 20382778.7
(22) Date of filing: 01.09.2020
(51) Int. Cl.: F02C 3/20, F02C 7/22, F02C 9/28

(54) **AIRCRAFT FLIGHT CONTRAIL ASSESSMENT DEVICE AND METHOD**
VORRICHTUNG UND VERFAHREN ZUR BEURTEILUNG VON FLUGZEUGFLUGKONDENSSTREIFEN
DISPOSITIF D'ÉVALUATION DE TRAÎNÉE DE CONDENSATION DE VOL D'AÉRONEF ET PROCÉDÉ

(43) Date of publication of application: 02.03.2022
(73) Proprietor: Airbus Operations, S.L.U., 28906 Getafe (ES); Airbus Operations GmbH, 21129 Hamburg (DE)
(72) Inventor: REDONDO GARCIA, Daniel, 28906 Madrid (ES); MEYER, Michael, 21129 HAMBURG (DE)

(56) References cited:
- US-A1- 2015 100 219
- US-A1- 2016 304 211

## Description

The invention relates to a device and method to assess and more particularly calculate a contrail amount produced by an aircraft. The invention intends to provide a device and method for calculating a contrail amount produced by an aircraft.

Contrails produced by aircrafts have an impact on climate. As natural occurring clouds, they reflect light, be it visible or non-visible, including infrared light. They may reflect light towards the earth, thereby increasing the radiative forcing - or blanket effect - contributing to global warming, and they may reflect sunlight towards space, thereby limiting global warming.

Different aircrafts, different atmospheric conditions, different flight parameters, different flights at different times of the day may all have different effects on the formation of contrails and their radiative forcing effect on the Earth.

Many scientific studies have provided a better understanding of the effects of aircrafts contrails on local weather, as well as on global climate.

However, there remains a need for a device and method that may evaluate precisely the amount of contrails generated during a specific flight.

US2016304211 describes an aircraft propulsion system comprising a combustion engine coupled to an electrical generator, a rotor coupled to an electric motor, and a controller which selectively varies the supply of electrical power to the electric motor in dependence on one or more property of a vapor trail resulting from the combustion engine exhaust flow. This system may comprise ambient condition sensors such as an optical sensor, humidity sensor, temperature sensor, etc in order to determine the initial particle size distribution of ice particles formed in the exhaust plume of an engine, in dependence upon ambient temperature, ambient pressure, ambient humidity, the determined number of emitted soot particles per unit distance of travel, and the mass of water vapor emitted by the engine per unit distance of travel. The system may also determine the time-integrated radiative forcing due to the contrail, based on incoming sunlight and albedo of the contrail.

Such system allows to optimize the engine parameters of an aircraft in order to minimize the atmospheric blanket effect of contrails.

US2015100219 discloses a fuel delivery system for an engine with two fuel compositions available for the engine, the system comprising a vapor trail detection sensor and a regulator to regulate the delivery of a mix of the two fuel composition to the engine, in response to the vapor trail characteristic. The vapor trail detection sensor may be an array of sensors and comprise an optical sensor delivering a signal indicative of the presence and/or properties of a vapor trail. The system may also comprise a device to illuminate at least part of the field of view of the sensor, the device projection either light or ultrasound. The sensor may be remote to the aircraft and be mounted on the ground, on airships or on satellites.

Such system may minimize the contrail production by modifying the fuel used by the engine.

However, alternative and complementary techniques may be adopted to further minimize the atmospheric blanket effect of contrails.

The invention aims to provide a device and method which would render such alternative and complementary techniques available.

The invention aims to provide a device and method that allow to precisely evaluate and attribute contrails to a specific flight.

The invention aims to provide a device and method that may improve our understanding of contrails formation.

The invention also aims to provide tools to limit contrails and to provide optimized routes for minimizing contrails formation and contrails effects.

The invention also aims to provide a precise evaluation of contrail formation in order to adjust potential taxes to an actual contribution to climate change of a flight.

The invention proposes a flight contrail assessment device according to claim 1.

The invention allows to accurately calculate a contrail formation for each flight. Data about contrails formation in real situation may thus be accumulated and analyzed. Thereby, flights may be optimized to reduce at maximum the global warming effect of the contrails formation. Also, with a device and a method of the invention, the impact of new technologies or new flying techniques on contrails formation may be evaluated.

In the whole text, the term "amount" of contrails represents an amount of contrails formed at a given instant or during a predefined duration such as the duration of a flight for example. It's the amount of contrail is influenced by the persistence of said contrail in the

The duration of a contrail represents the duration during which the contrail will remain in the atmosphere after having been formed. The duration may be measured by an observation sensor. It may also be calculated based on atmosphere data. The processing unit may particularly be adapted to calculate the duration of a contrail in the atmosphere based on one or more atmosphere parameter. Indeed, the atmospheric conditions affect greatly the duration of a contrail in the atmosphere and the way - in particular the speed at which - it will progressively disappear.

The processing unit may further be adapted to calculate a tax to be paid for a predetermined flight, based on said one or more contrails value(s). A device and process according to the invention thereby facilitate the calculation of taxes due by an airline for a specific flight. The invention allows to calculate taxes according to a legal obligation in an adjusted manner to each flight, such that such taxes may be perceived as fair by airlines.

The processing unit may be on-board the aircraft, the contrails amount of which are evaluated, or it may be decentralized in a different place, for example in a ground station.

Similarly the atmosphere sensor may be on-board the aircraft. Alternatively or in combination, for one or more atmosphere parameters, the atmosphere sensor may be equivalently replaced by data provided from a meteorological service measuring or calculating (based on measurement data) said atmosphere parameter.

At least one contrail sensor may be an electromagnetic radiation sensor.

The electromagnetic radiation sensor may be a visible light sensor, or a non-visible light sensor, such as an infrared sensor.

The electromagnetic radiation sensor may be a camera acquiring images of the environment around the aircraft. More particularly, the electromagnetic radiation sensor may be an infrared camera.

The electromagnetic radiation sensor may in particular be oriented towards areas situated behind the aircraft's engines, so as to acquire images of the atmosphere in the trail of an aircraft's engines where contrails usually form. The electromagnetic radiation sensor may also be oriented towards the aft of the aircraft, so as to be adapted to acquire images of already formed contrails, and at least part of their extent or duration.

At least one contrail sensor may be on-board the aircraft, the contrails of which are to be assessed. In particular, the electromagnetic radiation sensor may be a camera on-board the aircraft, the contrails of which are to be assessed.

At least one contrail sensor may be on-board another aircraft than the aircraft of which the contrails are to be assessed. The electromagnetic radiation sensor may be a camera on-board another aircraft than that of which the contrails are to be assessed.

In particular on dense aerial routes, a following aircraft may acquire contrails data representative of an observation parameter of one or more contrails of an aircraft flying in front of said following aircraft. Such configuration of a device according to the invention may particularly be applied for aircrafts of a same airline or airline group. Such configuration of a device according to the invention is particularly applicable to aircrafts in formation flights, in which a following aircraft flies in close proximity to the leading aircraft in order to minimize its fuel consumption.

At least one contrail sensor may be on-board a satellite.

A contrail sensor on-board a satellite produces satellite data which may contain detailed information on the contrail formation during a flight. In particular, a contrail sensor may be an imagery device on-board a satellite, adapted to acquire images of one or more contrails produced by one or more aircraft.

The processing unit may be adapted to calculate, live or a posteriori, at least part of a contrails value of a flight based on satellite data. Satellite imagery may allow to calculate a contrails value of multiple flights based on a same satellite image.

The contrails value of a predefined flight may be calculated based on a plurality of satellite images, acquired by one or more satellites. In particular in the case of a long-haul flight extending along a long portion of the earth, the images of contrails may be acquired by multiple satellites.

At least one contrail sensor may be on the ground.

Similarly to satellite images or data, a contrails sensor according to the invention may be on the ground. It may for example be a plurality of cameras turned towards the sky at different locations.

However satellite imagery may be better adapted for flights over water.

The processing unit may process data acquired both satellite(s) and ground station(s).

The processing unit may be adapted to analyze one or more images provided by said observation sensor(s).

The processing unit may be adapted to analyze imagery data from one or more observation sensor(s) based on any known image analysis technique, including image segmentation, object recognition, etc. Such software may be based on artificial intelligence processing, trained with a high number of known images, at least some of them comprising one or more contrails.

The processing unit may be adapted to simulate the effect of a change of at least one flight parameter on the contrails value.

A flight parameter may be any parameter relative to the flight of the aircraft such as for example: engine power, engine air-fuel mix, soot particles, angle of attack, laminarity of an air flow along at least one surface of the aircraft, speed, etc.

Thereby the processing unit may be adapted to provide a simulated result of the contrails value for one or more values of one or more flight parameters. The processing unit may in particular be adapted to simulate multiple scenarios, with a high number of flight parameters and/or flight parameter values. The processing unit may, as a result, provide a recommendation on flight parameters susceptible to minimize the amount of contrails formed. Such recommendation or simulation may be part of a larger optimization process taking into account other factors such as atmospheric factors, environmental factors, safety factors, economical factors, etc.

The processing unit may be adapted to simulate the effect of a change of at least one atmosphere parameter on the contrails value.

Based on atmospheric data representative of one or more atmosphere parameter in different locations (including geographical location and altitude), the processing unit may calculate a contrails value in different locations in the atmosphere. The processing unit may, as a result, provide a recommendation on one or more flight paths susceptible to minimize the amount of contrails formed. For example, in some cases, the inventors have determined that a slight change in the aircraft altitude may allow to generate a lot less of contrails.

The processing unit may be adapted to compute a radiative forcing value based on at least one said contrails value.

The radiative forcing value may be calculated directly from one or more contrails values.

As different parameters of a contrail may be taken into account to calculate one or more contrail values as defined in this invention, different parameters will influence the radiative forcing value.

Nonetheless, some parameters may again be taken into account for the calculation of a radiative forcing value such as for example atmospheric parameters. In particular the duration of a contrail in the atmosphere may greatly affect the radiative forcing value of such contrail. Therefore, meteorological information (time evolution of atmospheric parameters) may be taken into account to evaluate a lifetime of a contrail and therefore its radiative forcing effect.

The processing unit may be adapted to compute a radiative forcing value based on a time of emission of the contrail in the day. In particular, the processing unit may be adapted to compute a radiative forcing value based on a solar time of emission of the contrail in the day.

By solar time it is understood the time based on the position of the sun in the local sky at which the object considered (aircraft, contrail portion, etc) is located. The solar time may be obtained based on a geographical position of the aircraft, the local time and astronomical data about the sun's course in the sky mainly depending on the local season. Thereby, the time of contrail emission may be related to a solar time, such that the impact of the contrail may be better assessed. Indeed, a contrail has very different effects depending on whether it is emitted during the night or during the day, and in particular at which time during the day or the night. Depending on their solar time emission, contrails may have very different effects on radiative forcing. For example, although any contrail will reflect infrared emissions towards the earth, a contrail emitted at dawn will also at least partially reflect sunlight towards space; while a contrail emitted at sunset will not.

The radiative forcing value is also influenced by the duration and geometrical evolution of a contrail in time. The processing unit may be adapted to analyze the duration and/or geometrical evolution - including density - of the contrail during time, for example based on satellite imagery, ground imagery, or other imagery obtained by aircrafts flying after the evaluated flight.

The calculation of a radiative forcing value may be based on multiple contrail values at different instants of a flight, multiplied by a solar time factor. The integration of multiple radiative forcing values over the duration of a flight may provide a radiative forcing effect due to contrails of a whole flight.

The calculation of the radiative forcing value may also take additional parameters into account such as for example the altitude and temperature of the contrail, other clouds coverture and altitudes, etc.

The invention also extends to a method for assessing an aircraft flight contrail, said method being according to claim 12.

The invention also extends to other possible combinations of features described in the above description and in the following description relative to the figures. In particular, the invention extends to contrail assessment devices comprising features described in relation to the contrail assessment method and the invention extends to contrail assessment methods comprising features described in relation to the contrail assessment device.

Some specific exemplary embodiments and aspects of the invention are described in the following description in reference to the accompanying figures.
Figure 1 is a schematic representation of an aircraft comprising a contrail assessment device according to a first embodiment of the invention.
Figure 2 is a schematic representation of a contrail assessment device according to a second embodiment the invention.
Figure 3 is a schematic representation of a method according to the invention.

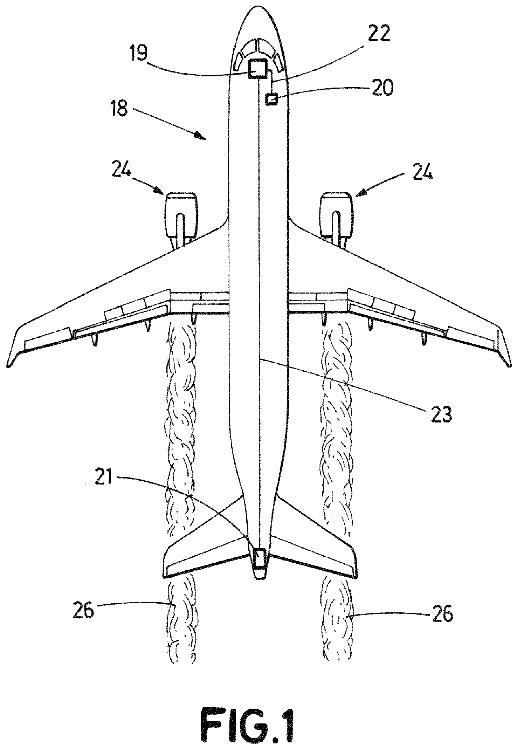

In Figure 1, a first embodiment of a contrail assessment device according to the invention is represented. The device is mounted on-board an aircraft 18, the contrails 26 of which are calculated by said contrail assessment device.

The contrail assessment device comprises an atmosphere sensor 20 such as an air humidity sensor for example. This sensor is in communication with a processing unit 19 through a communication line 22. The processing unit 19 is adapted to receive data as input from the atmosphere sensor 20.

The processing unit 19 is also connected to an observation sensor 21 through a communication line 23. The processing unit receives data produced by the observation sensor 21 as input. The observation sensor may be a camera. The camera 21 may be placed in an aft portion of the aircraft, and turned towards the aft of the aircraft so as to be able to acquire images of a trail of the aircraft in the atmosphere. Thereby the camera 21 may thus acquire images of the atmosphere that comprise contrails 26 formed by the engines 24 of the aircraft 18 on-board which it is mounted. By being oriented towards the back of the aircraft, and more particularly towards a region of the atmosphere in which the aircraft 18 has already flown, the camera 21 may acquire good images of the contrails 26 formed by the aircraft. Indeed the contrails often form at some distance after the engines exhaust, such that a camera turned towards a lateral side of the aircraft, behind the engines may not be able to acquire images of all contrails 16 formed. Moreover, by placing the camera 21 in the back of the aircraft and towards its trail, the extent and duration of the contrails 26 may also be extracted from the images acquired by the camera 21.

The device may beneficially comprise additional sensors. Such sensors, as well as the observation sensor 21 and the atmosphere sensor 20 may be shared with other on-board systems.

The processing unit is adapted to process observation data received from the observation sensor 21 and atmospheric data received from the atmosphere sensor 20. In particular the processing unit 19 is adapted to extract the portion of an image comprising one or more contrails. The processing unit is further adapted to extract from such images information such as the thickness, width, length, etc. of a contrail. All of these image analysis may be realized through known image analysis techniques.

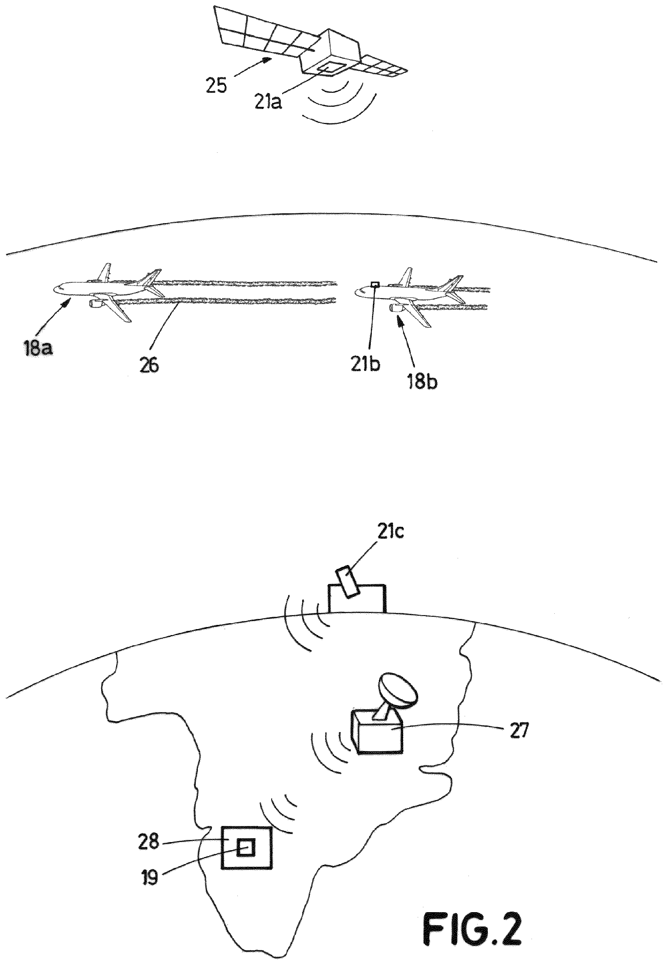

However, the combination of images and atmosphere data may provide more information than just images of the contrails 26. For example, when the contrails remain for a long duration in the atmosphere, an on-board camera will not be enough to measure the whole duration of the presence of a contrail in the atmosphere. Data on atmosphere parameters may thus help estimating the duration of a contrail in given atmospheric conditions, based on atmospheric models. Alternatively or in combination, other images may be acquired through other techniques as will be described in relation to the embodiment of figure 2.

In figure 2, a second embodiment of a contrail assessment device according to the invention is represented. The device is adapted to calculate a contrails value relative to the contrails amount produced by an aircraft 18a during a flight.

The contrail assessment device may comprise a decentralized processing unit 19 in a ground station 28.

In this embodiment, the processing unit 19 may receive observation data from an observation sensor such as:
- a satellite imaging device 21a,
- an imaging device 21b on-board a second aircraft 18b following the path of the aircraft 18a the contrails 26 of which are to be evaluated,
- a ground station imaging device 21c.

The satellite imaging device 21a and/or the ground station imaging device 21c may be infrared imaging devices.

In this embodiment, the processing unit 19 receives atmospheric data from a meteorological agency. The processing unit may also receive a location information from the aircraft 18a itself or from an observation sensor such as the satellite imaging device 21a. The processing unit may thus obtain atmospheric data relative to one or more atmospheric parameters at the location of the aircraft in the atmosphere.

A decentralized embodiment of the invention as represented on figure 2 is not incompatible with an embodiment on-board an aircraft as represented on figure 1. In some embodiments, parts of the device may be on-board the aircraft and other parts may be decentralized.

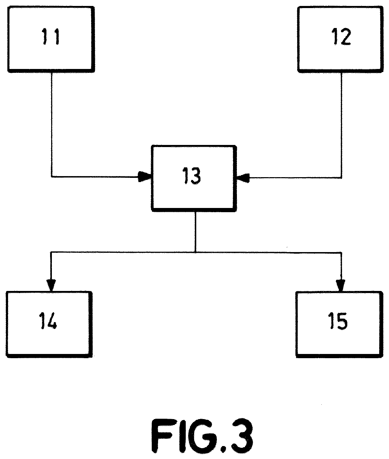

In figure 3, a process according to the invention is represented.

In a first step 11, observation data is acquired by an observation sensor, such as a camera for example. However the observation sensor may be of any other type, such as a radar, a lidar, etc.

In a second step 12, which can be simultaneous to the first step 11, atmosphere data is acquired by an atmosphere sensor about an atmosphere parameter. the atmosphere parameter may for example be a pressure, a temperature, a humidity percentage, a wind direction and/or force, an altitude, an amount of particles - such as ice particles for example, etc..

In a third step 13, the data acquired in the first step and the second step are processed in combination to calculate a contrails value representative of an amount of contrails. The amount of contrail may be an instantaneous amount, an amount during a defined short duration, or an amount during a whole flight; it may also be an amount for longer periods of time such as a month or a year of contrails generated by a given aircraft or by a given airline. In a fourth step 14, a contrails value is outputted. It may be sent to a display of a machine-human interface. Alternatively or in combination, in the third step an additional step of computing may be added which transforms an amount of contrails into a radiative forcing amount and/or a related tax to be paid. In step 14, the contrails value and/or the radiative forcing amount and/or the tax amount may be displayed.

In the third step 13, additional simulation steps happen. The processing unit receives atmosphere data representative of atmosphere parameters in different places than that of the aircraft. In particular, the processing unit receives atmosphere data representative of atmosphere parameters on potential flight paths in front of the aircraft for the particular flight it is operating. The processing unit thus simulates the contrails value on different potential paths ahead and provide, in a fifth step 15 - which may be simultaneous to the fourth step 14 - a recommendation about a flight path minimizing the contrails amount is proposed. The recommended path may be sent to a flight control processing unit and/or a pilot, such that further checks may be made, for example on the safety of such path, or on the fuel economy of such path, etc.

A simulation made by the processing unit may not be based on live atmospheric conditions. For example it may be known that a particular region is often covered with clouds, such that the radiative forcing effect of contrails above would be very low. Thereby a path over such region may be privileged.

Similarly, in third step 13, a simulation is made by varying flight parameters and a recommendation may be emitted in the fifth step 15.

Also, in a decentralized device, such as in the example of figure 2, the processing unit may receive localization data with data stamp representing the position at any time, or path, of the aircraft, the contrails of which are evaluated. The processing unit may thus link the position of the aircraft to contrails on satellite/ground/other aircraft images. This is particularly important in dense air traffic areas.

## Claims

1. Aircraft flight contrail assessment device comprising:
- at least one sensor, called contrail sensor, adapted to produce data, called contrails data, representative of:
∘ an atmosphere parameter having an influence on the formation of contrails, and preferably of
∘ an observation parameter varying depending on at least the presence of one or more contrails,
- a processing unit, adapted to calculate, based on at least said contrails data, at least a contrails value representative of an amount of contrail,
**characterized in that** the processing unit is adapted to:
- receive atmosphere data representative of atmosphere parameters on potential flight paths in front of the aircraft,
- simulate the contrails value on different potential paths ahead and provide a recommendation about a flight path minimizing the contrails amount.

2. Device according to claim 1, further **characterized in that** at least one contrail sensor is an electromagnetic radiation sensor.

3. Device according to claim 1 or 2, further **characterized in that** at least one contrail sensor is on-board the aircraft, the contrails of which are to be assessed.

4. Device according to any of claim 1 to 3, further **characterized in that** at least one contrail sensor is on-board another aircraft than the aircraft of which the contrails are to be assessed.

5. Device according to any of claim 1 to 4, further **characterized in that** at least one contrail sensor is on-board a satellite.

6. Device according to any of claim 1 to 5, further **characterized in that** at least one contrail sensor is on the ground.

7. Device according to any of claim 1 to 6, further **characterized in that** the processing unit is adapted to simulate the effect of a change of at least one flight parameter on the contrails value.

8. Device according to any of claim 1 to 7, further **characterized in that** the processing unit is adapted to simulate the effect of a change of at least one atmosphere parameter on the contrails value.

9. Device according to any of claim 1 to 8, further **characterized in that** the processing unit is adapted to compute a radiative forcing value based on at least one said contrails value.

10. Device according to any of claim 1 to 9, further **characterized in that** the processing unit is adapted to compute a radiative forcing value based on a time of emission of the contrail in the day.

11. Device according to any of claim 1 to 10, further **characterized in that** the processing unit is adapted to send a recommended path to a flight control processing unit and/or a pilot.

12. Aircraft flight contrail assessment method comprising:
- obtaining data, called contrails data, representative of:
∘ an atmosphere parameter having an influence on the formation of contrails, and preferably of
∘ an observation parameter varying depending on at least the presence of one or more contrails,
- calculating, based on at least said contrails data, at least a contrails value representative of an amount of contrail.
**characterized in that** it comprises:
- receiving atmosphere data representative of atmosphere parameters on potential flight paths in front of the aircraft,
- simulating the contrails value on different potential paths ahead and provide a recommendation about a flight path minimizing the contrails amount.

## Patentansprüche

1. Vorrichtung zur Bewertung von Flugzeugkondensstreifen, umfassend:
- zumindest einen Sensor, Kondensstreifensensor genannt, der angepasst ist, um Daten, Kondensstreifendaten genannt, zu produzieren, die repräsentativ sind für:
o ein Atmosphärenparameter, der einen Einfluss auf die Bildung von Kondensstreifen hat, und zwar vorzugsweise von
o einem Beobachtungsparameter, der zumindest von der Anwesenheit eines oder mehrerer Kondensstreifen variiert,
- eine Verarbeitungseinheit, die angepasst ist, um basierend auf zumindest den Kondensstreifen-Daten zumindest einen Kondensstreifen-Wert zu berechnen, der für eine Menge an Kondensstreifen repräsentativ ist,
**dadurch gekennzeichnet, dass** die Verarbeitungseinheit angepasst ist, um:
- Atmosphärendaten zu empfangen, die repräsentativ für die Atmosphärenparameter auf potenziellen Flugwegen vor dem Flugzeug sind,
- den Kondensstreifenwert auf verschiedenen möglichen vorausliegenden Wegen zu simulieren und eine Empfehlung für einen Flugweg zu geben, der die Kondensstreifenmenge minimiert.

2. Vorrichtung nach Anspruch 1, ferner **dadurch gekennzeichnet, dass** zumindest ein KondensstreifenSensor ein Sensor für elektromagnetische Strahlung ist.

3. Vorrichtung nach Anspruch 1 oder 2, ferner **dadurch gekennzeichnet, dass** sich zumindest ein Kondensstreifensensor an Bord des Flugzeugs befindet, dessen Kondensstreifen ausgewertet werden sollen.

4. Vorrichtung nach einem der Ansprüche 1 bis 3, ferner **dadurch gekennzeichnet, dass** sich zumindest ein Kondensstreifensensor an Bord eines anderen Flugzeugs befindet als das Flugzeug, dessen Kondensstreifen ausgewertet werden sollen.

5. Vorrichtung nach einem der Ansprüche 1 bis 4, ferner **dadurch gekennzeichnet, dass** sich zumindest ein Kondensstreifensensor an Bord eines Satelliten befindet.

6. Vorrichtung nach einem der Ansprüche 1 bis 5, ferner **dadurch gekennzeichnet, dass** sich zumindest ein Kondensstreifensensor auf dem Boden befindet.

7. Vorrichtung nach einem der Ansprüche 1 bis 6, ferner **dadurch gekennzeichnet, dass** die Verarbeitungseinheit dazu angepasst ist, die Auswirkung einer Änderung von zumindest einem Flugparameter auf den Kondensstreifenwert zu simulieren.

8. Vorrichtung nach einem der Ansprüche 1 bis 7, ferner **dadurch gekennzeichnet, dass** die Verarbeitungseinheit dazu angepasst ist, die Auswirkung einer Änderung von zumindest einem Atmosphärenparameter auf den Kondensstreifenwert zu simulieren.

9. Vorrichtung nach einem der Ansprüche 1 bis 8, ferner **dadurch gekennzeichnet, dass** die Verarbeitungseinheit angepasst ist, um einen Strahlungstreiberwert basierend auf zumindest einem der Kondensstreifenwerte zu berechnen.

10. Vorrichtung nach einem der Ansprüche 1 bis 9, ferner **dadurch gekennzeichnet, dass** die Verarbeitungseinheit angepasst ist, um einen Strahlungstreiberwert basierend auf einem Zeitpunkt der Emission des Kondensstreifens am Tag zu berechnen.

11. Vorrichtung nach einem der Ansprüche 1 bis 10, ferner **dadurch gekennzeichnet, dass** die Verarbeitungseinheit angepasst ist, um einen empfohlenen Weg an eine Flugsteuerungsverarbeitungseinheit und/oder einen Piloten zu senden.

12. Verfahren zur Bewertung von Flugzeugkondensstreifen, umfassend:
- Erhalten von Daten, Kondensstreifendaten genannt, repräsentativ für:
o einen Atmosphärenparameter, der einen Einfluss auf die Bildung von Kondensstreifen hat, und zwar vorzugsweise von
o einem Beobachtungsparameter, der zumindest von der Anwesenheit eines oder mehrerer Kondensstreifen variiert,
- Berechnen, basierend auf zumindest den Kondensstreifendaten, zumindest eines Kondensstreifenwertes, der repräsentativ für die Menge des Kondensstreifens ist,
**dadurch gekennzeichnet, dass** es umfasst:
- Empfangen von Atmosphärendaten, die repräsentativ für die Atmosphärenparameter auf potenziellen Flugwegen vor dem Flugzeug sind,
- Simulieren des Kondensstreifenwertes auf verschiedenen möglichen vorausliegenden Wegen und eine Empfehlung für einen Flugweg zu geben, der die Kondensstreifenmenge minimiert.

## Revendications

1. Dispositif d'évaluation de traînées de condensation en vol d'un aéronef, comprenant :
- au moins un capteur, dénommé capteur de traînées de condensation, adapté à produire des données, dénommées données de traînées de condensation, représentant :
o un paramètre atmosphérique ayant une influence sur la formation de traînées de condensation et, de préférence
o un paramètre d'observation variant en fonction au moins de la présence d'une ou de plusieurs traînées de condensation,
- une unité de traitement, adaptée à calculer, sur la base au moins desdites données de traînées de condensation, au moins une valeur de traînées de condensation représentant une quantité de traînées de condensation,
**caractérisé en ce que** l'unité de traitement est adaptée à :
- recevoir des données atmosphériques représentant des paramètres atmosphériques sur des trajectoires de vol potentielles en avant de l'aéronef,
- simuler la valeur de traînées de condensation sur différentes trajectoires potentielles devant et fournir une recommandation concernant une trajectoire de vol qui minimise la quantité de traînées de condensation.

2. Dispositif selon la revendication 1, **caractérisé en outre en ce qu'**au moins un capteur de traînées de condensation est un capteur de rayonnement électromagnétique.

3. Dispositif selon la revendication 1 ou 2, **caractérisé en outre en ce qu'**au moins un capteur de traînées de condensation est à bord de l'aéronef dont les traînées de condensation doivent être évaluées.

4. Dispositif selon l'une quelconque des revendications 1 ou 3, **caractérisé en outre en ce qu'**au moins un capteur de traînées de condensation est à bord d'un aéronef autre que l'aéronef dont les traînées de condensation doivent être évaluées.

5. Dispositif selon l'une quelconque des revendications 1 à 4, **caractérisé en outre en ce qu'**au moins un capteur de traînées de condensation est à bord d'un satellite.

6. Dispositif selon l'une quelconque des revendications 1 à 5, **caractérisé en outre en ce qu'**au moins un capteur de traînées de condensation est au sol.

7. Dispositif selon l'une quelconque des revendications 1 à 6, **caractérisé en outre en ce que** l'unité de traitement est adaptée à simuler l'effet d'une variation d'au moins un paramètre de vol sur la valeur de traînées de condensation.

8. Dispositif selon l'une quelconque des revendications 1 à 7, **caractérisé en outre en ce que** l'unité de traitement est adaptée à simuler l'effet d'une variation d'au moins un paramètre atmosphérique sur la valeur de traînées de condensation.

9. Dispositif selon l'une quelconque des revendications 1 à 8, **caractérisé en outre en ce que** l'unité de traitement est adaptée à calculer une valeur de forçage radiatif sur la base d'au moins une dite valeur de traînées de condensation.

10. Dispositif selon l'une quelconque des revendications 1 à 9, **caractérisé en outre en ce que** l'unité de traitement est adaptée à calculer une valeur de forçage radiatif sur la base de l'heure de la journée à laquelle les traînées de condensation sont émises.

11. Dispositif selon l'une quelconque des revendications 1 à 10, **caractérisé en outre en ce que** l'unité de traitement est adaptée à envoyer une trajectoire recommandée à une unité de traitement de commande de vol et/ou à un pilote.

12. Procédé d'évaluation de traînées de condensation en vol d'un aéronef, comprenant :
- l'obtention de données, dénommées données de traînées de condensation, représentant :
o un paramètre atmosphérique ayant une influence sur la formation de traînées de condensation et, de préférence
o un paramètre d'observation variant en fonction au moins de la présence d'une ou de plusieurs traînées de condensation,
- le calcul, sur la base au moins desdites données de traînées de condensation, d'au moins une valeur de traînées de condensation représentant une quantité de traînées de condensation,
**caractérisé en ce qu'**il comprend :
- la réception de données atmosphériques représentant des paramètres atmosphériques sur des trajectoires de vol potentielles en avant de l'aéronef,
- la simulation de la valeur de traînées de condensation sur différentes trajectoires potentielles devant et la fourniture d'une recommandation concernant une trajectoire de vol qui minimise la quantité de traînées de condensation.
